# EUROPÄISCHE PATENTANMELDUNG

(11) **EP 3 147 055 A1**
(43) Veröffentlichungstag der Anmeldung: **29.03.2017**
(21) Anmeldenummer: 15187050.8
(22) Anmeldetag: 28.09.2015
(51) Int. Cl.: B23B 45/06, B23B 49/02, B23B 51/04, B28D 1/04

(54) **LOCHSÄGE**

(71) Anmelder: HILTI Aktiengesellschaft, 9494 Schaan (LI)
(72) Erfinder: Sirch, Maximilian, 86807 Honsolgen (DE); Happach, Helmut, 86836 Untermeitingen (DE); Münzenberger, Herbert, 65191 Wiesbaden (DE)
(74) Vertreter: Hilti Aktiengesellschaft Corporate Intellectual Property

(57) **Zusammenfassung**

Werkzeug (100) zum Erstellen einer Wandöffnung (220), mit einer Lochsäge (10) und einer Zentriervorrichtung, die eine durch den Mittelpunkt der Lochsäge (10) verlaufende Zentrierachse (A) aufweist, wobei die Zentriervorrichtung als Zentrierring (20) ausgebildet ist, in den die Lochsäge zumindest abschnittsweise eingeschoben werden kann, und wobei sowohl die Lochsäge (10) als auch der Zentrierring (20) an ihrem Umfang eine Öffnung (11, 21) derart aufweisen, dass diese quer zur Zentrierachse (A) vollständig auf eine Leitung (300) aufgeschoben werden können.

## Beschreibung

Die vorliegende Erfindung betrifft ein Werkzeug zum Erstellen einer Wandöffnung, mit einer Lochsäge und einer Zentriervorrichtung, die eine Zentrierachse aufweist. Derartige Lochsägen sind grundsätzlich aus dem Stand der Technik bekannt und dienen dem Erstellen von Öffnungen in Trockenwänden beispielsweise aus Gipskartonplatten. Die Zentriervorrichtung ist typsicherweise als koaxial zur Zentrierachse verlaufender Zentrierbohrer ausgebildet. Die mittels der Lochsäge erstellten Öffnungen dienen der Durchführung von Leitungen oder dem Einbau von Hohlwanddosen.

Die Offenlegungsschrift DE 103 05 696 A1 offenbart eine solche Lochsäge mit einer Zentriervorrichtung. Eine andere Lochsäge zum Bohren von kreisförmigen Aussparungen für Hohlwanddosen ist aus der Gebrauchsmusterschrift DE 296 00 263 U1 bekannt. Weitere Werkzeuge zum Erstellen einer Öffnung in einer Wandbauplatte sind aus den Druckschriften US 3,381,376 und US 2,787,324 bekannt.

Es ist Aufgabe der vorliegenden Erfindung ein Werkzeug zum Erstellen einer Wandöffnung bereitzustellen, das vielseitig einsetzbar ist. Es ist ebenfalls Aufgabe der Erfindung ein Verfahren zum Erstellen einer Wandöffnung anzugeben.

Bezüglich des Werkzeugs wird die Aufgabe gelöst durch ein Werkzeug der eingangs genannten Art bei dem die Zentriervorrichtung als Zentrierring ausgebildet ist, in den die Lochsäge zumindest abschnittsweise eingeschoben werden kann. Sowohl die Lochsäge als auch der Zentrierring weisen an ihrem Umfang eine Öffnung derart auf, dass diese quer zur Zentrierachse vollständig auf eine Leitung aufgeschoben werden können. Vorzugsweise ist die Leitung eine bereits aus einer Wand hervorstehende Leitung.

Die Erfindung schließt die Erkenntnis ein, dass Ausfädelungen von Leitungen, Kabeln, Rohren oder Vergleichbaren, aus Trocken-bauwänden sowie Durchführungen von Leitungen, Kabeln, Rohren oder Vergleichbaren, durch Trockenbauwände weiter an Bedeutung zunehmen und je nach Einsatzfall sowohl Brandschutzanforderungen, als auch Anforderungen an den Schallschutz, Rauchgasdichtigkeit und Zugluftstopp genügen müssen.

Im Bereich Brandschutz hat es sich seit Jahren bewährt, vorgefertigte Brandschutztüllen zunächst in eine Trockenbauwand einzubringen und danach Leitungen über diese Brandschutztüllen einzuschieben. Allerdings erfordert eine vorgefertigte Brandschutztülle für ihren Einbau in die Trockenbauwand eine vorhandene, auf die jeweilige Tülle abgestimmte Öffnung. Eine solche abgestimmte Wandöffnung kann bei bereits installierter Leitung mit den Lochsägen der Werkzeuge des Standes der Technik bisher nicht erstellt werden. Vielmehr muss ein Ringspalt um eine bereits in der Trockenbauwand installierte Leitung mittels einer Dichtmasse erstellt werden, welche nicht vorgeformt verfügbar ist, sondern als pastöse Masse eingebaut wird.

Mit dem erfindungsgemäßen Werkzeug ist nunmehr überhaupt erst möglich, eine auf eine jeweilige Brandschutztülle abgestimmte Wandöffnung auch bei einer bereits in der Trockenbauwand installierten Leitung zu erstellen.

Somit ist das erfindungsgemäße Werkzeug auch vielseitig einsetzbar, nämlich sowohl bei bereits in der Trockenbauwand installierter Leitung als auch bei noch in der Trockenbauwand zu installierenden Leitung.

Bezüglich des Verfahrens wird die Aufgabe gelöst durch ein Verfahren zum Erstellen einer Wandöffnung um eine bereits aus einer Wand hervorstehenden Leitung mittels eines vorbeschriebenen Werkzeugs, mit den Schritten: Aufschieben des Zentrierrings auf die Leitung, danach Fixieren des Zentrierrings relativ zu der Wand, danach Einsetzen der Lochsäge in den Zentrierring, und danach Drehen der Lochsäge um die Zentrierachse zum Erstellen der Wandöffnung.

Vorzugsweise sieht das Verfahren ein anschließendes Einsetzen einer Brandschutztülle in die Wandöffnung vor.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

Die Begriffe "aufweisen", "mit" und "haben" sollen einschließend sein und bedeuten, dass auch andere als die genannten Elemente gemeint sein können.

In den Figuren sind gleiche und gleichartige Komponenten mit gleichen Bezugszeichen beziffert.

Es zeigen:
- Fig. 1: ein bevorzugtes Ausführungsbeispiel eines erfindungsgemäßen Werkzeugs;
- Fig. 2: eine bereits aus einer Wand hervorstehende Leitung;
- Fig. 3: ein auf die Leitung aufgeschobenen Zentrierring;
- Fig. 4: ein an der Wand fixierter Zentrierring;
- Fig. 5: ein Zentrierring mit eingeschobener Lochsäge;
- Fig. 6: eine um das hervorstehende Leitung erstellte Wandöffnung; und
- Fig. 7: eine in die Wandöffnung eingesetzte Brandschutztülle.

### Ausführungsbeispiel:

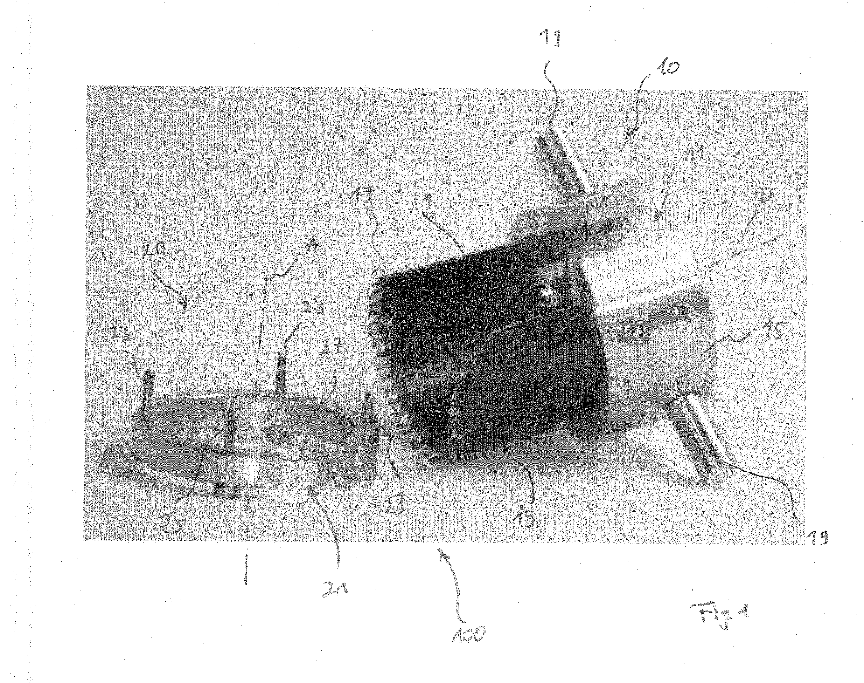

Ein bevorzugtes Ausführungsbeispiel eines erfindungsgemäßen Werkzeugs 100 ist in Figur 1 gezeigt. Das Werkzeug 100 weist eine Lochsäge 10 und eine als Zentrierring 20 ausgebildete Zentriervorrichtung auf. Die Lochsäge 10 ist auf der rechten Seite der Figur 1, der Zentrierring 20 auf der linken Seite der Figur 1 dargestellt.

Die als Zentrierring 20 ausgebildete Zentriervorrichtung weist eine Zentrierachse A auf, die vorliegend durch eine Strich-Punktlinie dargestellt ist. Die Zentrierachse A verläuft mittig durch einen durch den Zentrierring 20 definierten Vollkreis.

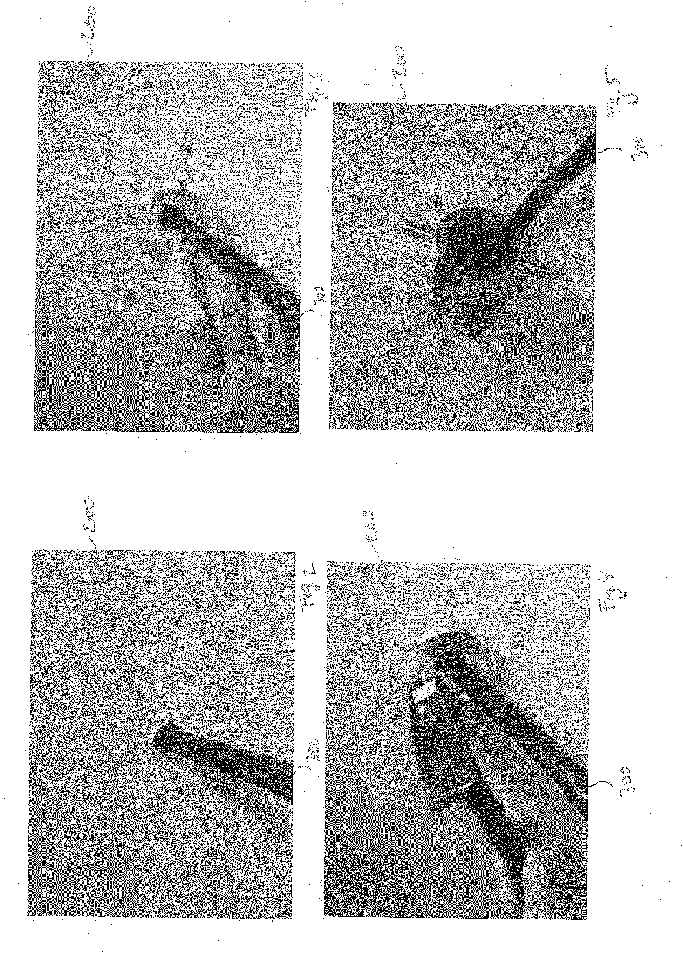

Der Zentrierring 20 weist an seinem Umfang eine Öffnung 21 auf. Diese Öffnung 21 ist derart ausgebildet, dass der Zentrierring 20 auf eine Leitung aufgeschoben werden kann (vergleiche Figur 3). Dabei erstreckt sich die Öffnung 21 über weniger als ein Viertel der Umfangslänge des Zentrierrings 20. Der Zentrierring 20 weist einen inneren Umfang 27 auf, der durch eine gestrichelte Linie angedeutet ist.

Die Lochsäge 10 auf der rechten Seite der Figur 1 weist einen Grundträger 13 und ein daran angebrachtes Sägeblatt 15 auf. Im vorliegend dargestellten Ausführungsbeispiel ist genau ein Sägeblatt 15 vorgesehen.

Ein äußerer Umfang 17 des Sägeblatts 15, angedeutet durch eine gestrichelte Linie, ist kleiner als der innere Umfang 27 des Zentrierrings 20. Dabei sind der äußere Umfang 17 des Sägeblatts 15 und der innere Umfang 27 des Zentrierrings 20 mit Spielpassung gepaart, so dass sich das Sägeblatt 15 leicht in den Zentrierring 20 einführen lässt und gleichzeitig in diesem präzise geführt wird.

Wie ebenfalls der Figur 1 entnommen werden, kann weist die Lochsäge 10 an ihrem Umfang eine Öffnung 11 auf, die vorliegend vollständig durch den Grundträger 13 und das Sägeblatt 15 verläuft, so dass die Lochsäge 10 zehn quer zu ihrer Drehachse D auf die Leitung aufgeschoben werden kann (vergleiche Figur 5). Die Drehachse D der Lochsäge 10 verläuft koaxial zur Zentrierachse A, wenn die Lochsäge 10 in den Zentrierring 20 eingeschoben ist.

Wie ebenfalls der Figur 1 entnommen werden kann, erstreckt sich die Öffnung 21 am Umfang der Lochsäge 10, die vorliegend sowohl am Sägeblatt 15 als auch am Grundträger 13 ausgebildet ist, über weniger als ein Viertel der Umfangslänge der Lochsäge 10.

Der Zentrierring 20 weist Dorne 23 zum Fixieren des Zentrierrings 20 an einer Wand (vergleiche Figur 4) auf. Im vorliegend dargestellten Ausführungsbeispiel sind die Dorne 23 nagelförmig ausgebildet und ragen parallel zur Zentrierachse A vom Zentrierring 20 ab.

Zum Betätigen der Lochsäge 10 von Hand weist diese Handbetätigungsmittel 19 auf, die vorliegend in Form zweier Griffstücke bereitgestellt sind, die quer zur Drehachse D vom Grundkörper 15 abragen.

Im Folgenden soll mit Bezug auf die Figuren 2 bis 7 ein Verfahren zum Erstellen einer Wandöffnung um eine bereits aus einer Wand hervorstehende Leitung beschrieben werden. Dazu zeigt Figur 2 eine Leitung 300, das aus einer Wand 200, vorliegend einer Gipskartonwand, hervorragt.

In einem ersten Schritt in Figur 3 wird der Zentrierring 20 zunächst auf die Leitung 300 aufgeschoben. Da der Zentrierring 20 an seinem Umfang eine Öffnung 21 aufweist, kann der Zentrierring 20 quer zur Zentrierachse A vollständig auf die Leitung 300 aufgeschoben werden. Mit anderen Worten befindet ist ein gedachter Leitungsquerschnitt vollständig in einem inneren Volumen des Zentrierrings 20 aufgenommen.

In Figur 4 ist gezeigt, wie der Zentrierring 20 durch Einschlagen der hier nicht gezeigten Dorne mit einem Hammer relativ zu der Wand 200 fixiert werden kann.

In einem anschließenden Schritt erfolgt das Einsetzen der Lochsäge 10 in den Zentrierring 20. Das Ergebnis ist in Figur 5 gezeigt. Insbesondere in Figur 5 zu erkennen ist die Öffnung 11 am Umfang der Lochsäge 10, die ermöglicht, dass die Lochsäge 10 quer zur Zentrierachse Z des Zentrierrings 20 und quer zur Drehachse D der Lochsäge 10 auf die Leitung 300 aufgeschoben werden kann.

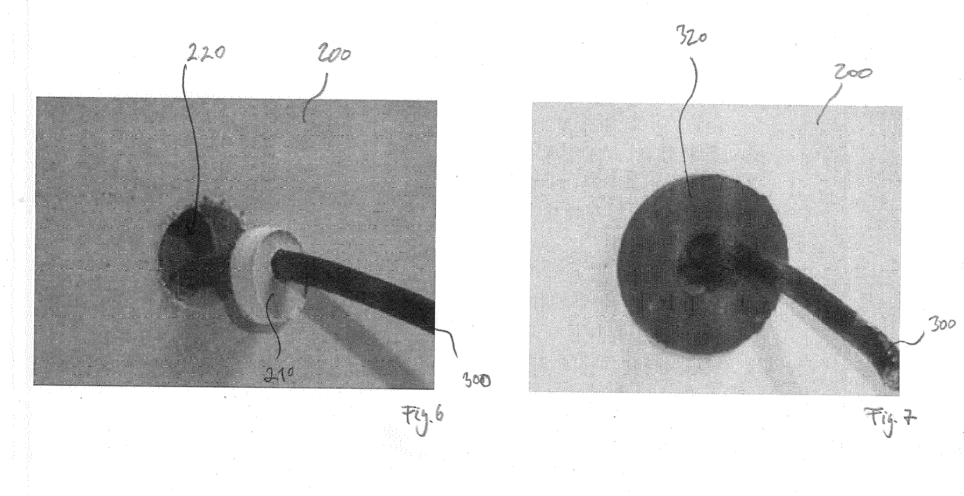

Anschließend wird die Lochsäge 10 in Pfeilrichtung um ihre Drehachse D gedreht und so die in Figur 6 gezeigte Wandöffnung 220 erhalten. Ein Ausbruch 210 verbleibt zunächst um die Leitung 300 und kann im weiteren Verlauf leicht entfernt werden. Anschließend, dies ist in Figur 7 gezeigt, wird eine vorgefertigte Brandschutztülle 230 in die Wandöffnung 220 eingesetzt.

### Bezugszeichenliste

- 10: Lochsäge
- 11: Öffnung an der Lochsäge
- 13: Grundträger
- 15: Sägeblatt
- 17: äußerer Umfang
- 20: Zentrierring
- 21: Öffnung am Zentrierring
- 23: Dorn
- 27: innerer Umfang
- 100: Werkzeug
- 200: Wand
- 220: Wandöffnung
- 300: Leitung
- 320: Brandschutztülle
- A: Zentrierachse

## Patentansprüche

1. Werkzeug (100) zum Erstellen einer Wandöffnung (220), mit einer Lochsäge (10) und einer Zentriervorrichtung, die eine Zentrierachse (A) aufweist,
**dadurch gekennzeichnet, dass** die Zentriervorrichtung als Zentrierring (20) ausgebildet ist, in den die Lochsäge (10) zumindest abschnittsweise eingeschoben werden kann, und dass sowohl die Lochsäge (10) als auch der Zentrierring (20) an ihrem Umfang eine Öffnung (11, 21) derart aufweisen, dass diese quer zur Zentrierachse (A) vollständig auf eine Leitung (300) aufgeschoben werden können.

2. Werkzeug (100) nach Anspruch 1,
**dadurch gekennzeichnet, dass** die Lochsäge einen Grundträger (13) und ein daran angebrachtes Sägeblatt (15) aufweist, wobei ein äußerer Umfang (17) des Sägeblatts (15) kleiner ist, als ein innerer Umfang (27) des Zentrierrings (20).

3. Werkzeug (100) nach Anspruch 2,
**dadurch gekennzeichnet, dass** der äußere Umfang (17) des Sägeblatts (15) und der innere Umfang (27) des Zentrierrings (20) mit Spielpassung gepaart sind.

4. Werkzeug (100) nach einem der vorangehenden Ansprüche,
**dadurch gekennzeichnet, dass** der Zentrierring (20) wenigstens einen Dorn (23) zum Fixieren des Zentrierrings (20) an einer Wand (200) aufweist.

5. Werkzeug (100) nach einem der vorangehenden Ansprüche,
**dadurch gekennzeichnet, dass** das Werkzeug (100) frei von einem koaxial zur Zentrierachse (A) verlaufendem Zentriermittel oder Zentrierbohrer ist.

6. Werkzeug (100) nach einem der vorangehenden Ansprüche,
**dadurch gekennzeichnet, dass** sich die Öffnung (11, 12) über weniger als ein Viertel der der Umfangslänge erstreckt.

7. Werkzeug (100) nach einem der vorangehenden Ansprüche,
**dadurch gekennzeichnet, dass** die Lochsäge (10) genau ein Sägeblatt (15) aufweist.

8. Werkzeug (100) nach einem der vorangehenden Ansprüche,
**dadurch gekennzeichnet, dass** die Lochsäge (10) Handbetätigungsmittel (19) aufweist, das beim bestimmungsgemäßen Betrieb des Werkzeugs (100) nur auf einer Seite der zu erstellenden Wandöffnung (220) befindlich ist.

9. Verfahren zum Erstellen einer Wandöffnung (220) um ein bereits aus einer Wand (200) hervorstehendes Leitung (300) mittels eines Werkzeugs (100) nach einem der vorangehenden Ansprüche, mit den Schritten:
- Aufschieben des Zentrierrings (20) auf die Leitung (300), danach
- Fixieren des Zentrierrings (20) relativ zu der Wand (200), danach
- Einsetzen der Lochsäge (10) in den Zentrierring (20), und danach
- Drehen der Lochsäge (10) um die Zentrierachse (A).

10. Verfahren nach Anspruch 9, mit dem Schritt:
- Einsetzen einer Brandschutztülle (320) in die Wandöffnung (220).
